# EUROPEAN PATENT SPECIFICATION

(11) **EP 3 292 183 B1**
(45) Date of publication and mention of the grant of the patent: **25.05.2022**
(21) Application number: 16788967.4
(22) Date of filing: 06.05.2016
(51) Int. Cl.: C09K 21/14, A47C 27/14, A47C 27/22, A47C 31/00, C08K 5/521, C09K 21/12, B32B 5/18, B32B 5/02, B32B 5/06, B32B 5/24, B32B 7/08, B32B 7/12, B32B 7/14, B32B 3/04, C08G 18/48, C08G 18/76, C08G 18/24, C08G 18/32, C08G 18/66, C08G 101/00

(54) **FIRE-RETARDANT POLYURETHANE FOAM MATTRESS AND METHOD OF MANUFACTURE THEREOF**
FLAMMWIDRIGE POLYURETHANSCHAUMMATRATZE UND VERFAHREN ZUR HERSTELLUNG DAVON
MATELAS DE MOUSSE DE POLYURÉTHANE IGNIFUGE ET PROCÉDÉ DE FABRICATION ASSOCIÉ

(30) Priority: 06.05.2015 AU 2015100604; 26.01.2016 NZ 71632916
(43) Date of publication of application: 14.03.2018
(73) Proprietor: Bovell, Christopher Mervyn, Bracken Ridge, Queensland 4017 (AU)
(72) Inventor: Bovell, Christopher Mervyn, Bracken Ridge, Queensland 4017 (AU)
(74) Representative: Newcombe, Christopher David
(86) International application number: PCT/AU2016/050335
(87) International publication number: WO 2016/176741

(56) References cited:
- WO-A1-03/064759
- WO-A1-2009/078725
- US-A- 4 092 752
- US-A- 4 092 752
- US-A- 4 994 317
- US-A1- 2004 109 992
- US-A1- 2006 048 304
- US-A1- 2006 048 304
- US-A1- 2011 190 407
- US-A1- 2011 190 407
- US-A1- 2013 330 497
- US-A1- 2013 330 497
- US-A1- 2014 275 305
- US-A1- 2014 275 305

## Description

### FIELD OF THE INVENTION

The present invention relates to polyurethane foam mattresses and in particular to a fire-retardant polyurethane foam mattress and a method of manufacture thereof.

### BACKGROUND OF THE INVENTION

A mattress provides comfort to a user so that they can rest or sleep comfortably. It is important that a mattress has superior safety characteristics whilst also providing comfort to the user.

Conventional polyurethane foam mattresses have been found to be extremely dangerous in fires because of the thermal degradation of the polyurethane foam and other components within the mattress resulting in the production of highly combustible liquids and/or gases. Others have attempted to circumvent this problem by covering the polyurethane foam with a layer of fiber glass cloth as a fire barrier which has proved only partially successful. Encapsulating the fiber glass cloth within a poly vinyl chloride (PVC) membrane brings in environmental issues due to the toxicity of the various additives used in the production of PVC such as plasticisers which contain hazardous chemicals, fire retardants and biocides which prevent the growth of bacteria and fungi. Further to this, when PVC is exposed to a flame a significant amount of smoke, noxious gas, flammable gas and flammable liquid is released. This is undesirable because the smoke and noxious gases are asphyxiation risks and, even following safe escape from a fire, can be detrimental to a user's long term health, and the flammable gases and liquids can further fuel a fire.

More recently, melamine has been employed as a fire retardant in polyurethane foam mattresses. However, increasing melamine content has the undesirable effect of increasing the density and compression strength of the foam, while decreasing the tensile strength and elongation. In this respect, the structure of the polyurethane foam is ultimately weakened.

One attempt to provide a fire resistant mattress is described in WO 03/064759, which is directed towards a fire resistant structural material and fabric. The fire resistant decorative fabrics can be used in upholstery, mattresses and the like. This document discusses the use of surfactant-generated microbubbles and microcells in providing a more fire-resistant material. The fire resistant structural material includes a range of clay fillers, latex binders and the like and is a relatively expensive and complicated approach.

US 4,994,317 is directed towards a fabric suitable for use as a flame barrier. The flame barrier fabric comprises a textile fabric surface, a silicone coating upon this surface and a reflective metal paint layer coated onto the silicone. It is taught that the textile fabric surface should be closest to the fire with the silicon coating behind this and the reflective paint behind the silicone coating. The use of a metal paint layer requires relatively high temperatures in formation, adds to the expense of manufacture and raises disposal problems. Further, the silicone layer is described as being discontinuous which may allow for breathability of the underlying material over which the fabric is applied, however, the use of a metal paint layer prevents the passage of water vapour and so the use of this barrier fabric will not allow for breathability. The use of an outer fibreglass layer provides for an uncomfortable surface and, while suitable for drapes and other upholstery uses described in US 4,994,317, would not be suitable for use as a mattress outer surface. The teaching of US 4,994,317 is not suitable for application to mattress production.

Accordingly, there is a need in the art for a foam mattress that is fire-retardant, easy to manufacture, environmentally friendly, provides sufficient breathability and waterproof properties and has other desirable mechanical properties.

It is to be understood that, if any prior art information is referred to herein, such reference does not constitute an admission that the information forms part of the common general knowledge in the art, in Australia or any other country.

### OBJECT OF THE INVENTION

The present invention seeks to provide a fire-retardant mattress, and a method of manufacture thereof, which will overcome or substantially ameliorate at least some of the deficiencies of the prior art, or to at least provide an alternative.

### SUMMARY OF THE INVENTION

According to a first aspect of the present invention, there is provided a fire-retardant mattress comprising:
- a polyurethane foam prepared from a composition comprising at least a polyol, an organic polyisocyanate and a fire retardant; and
- an outer layer encapsulating the polyurethane foam, wherein the outer layer comprises a waterproof membrane of silicone rubber and a fire-resistant barrier layer disposed substantially between the waterproof membrane and the polyurethane foam
- wherein the fire-resistant barrier layer comprises a woven cloth, and the woven cloth comprises glass fibers.

In one embodiment, the outer layer consists or consists essentially of silicone rubber.

In one embodiment, the fire retardant comprises a phosphate ester.

Suitably, the phosphate ester is selected from the group consisting of halogenated phosphate esters and non-halogenated phosphate esters.

In one embodiment, the polyurethane foam is substantially melamine-free.

In one embodiment, the polyurethane foam is prepared from a composition which further comprises a blowing or foaming agent.

Suitably, the blowing or foaming agent is selected from the group consisting of water, carbon dioxide, dichloromethane, and combinations thereof

There is described a polyurethane foam for use in a fire-retardant mattress, wherein the polyurethane foam is prepared from a composition comprising at least a polyol, an organic polyisocyanate, and a fire retardant.

In one example, the fire retardant comprises a phosphate ester.

Suitably, the phosphate ester is selected from the group consisting of halogenated phosphate esters and non-halogenated phosphate esters. In preferred examples, the phosphate ester is tris-(2-chloroisopropyl)-phosphate (TCPP).

In one example, the fire retardant comprises from at least about 10 parts of a phosphate ester per 100 parts by weight of the polyol, optionally at least about 15 parts, or at least about 20 parts, or at least about 30 parts.

In a preferred example, the fire retardant comprises at least about 30 parts of a phosphate ester per 100 parts by weight of the polyol.

In one example, the polyurethane foam is prepared from a composition which further comprises a blowing or foaming agent. Suitably, the one or more blowing agents are selected from the group consisting of water, carbon dioxide, dichloromethane, and combinations thereof.

In one example, the composition further comprises a catalytic amount of a reaction catalyst.

Suitably, the reaction catalyst is selected from the group consisting of a metallic salt, a tertiary amine, and combinations thereof.

In preferred examples, the reaction catalyst comprises a combination of a tin-based and/or amine-based catalyst.

Suitably, the organic polyisocyanate comprises an organic diisocyanate.

In preferred examples, the organic polyisocyanate is an aromatic diisocyanate, such as toluene diisocyanate.

Suitably, the polyol is selected from the group consisting of polyether polyols and polyester polyols.

In one example, the polyol is a polyalkylene glycol. The polyalkylene glycol may be a C₂-C₁₂ polyalkylene glycol, preferably a C₂-C₆ polyalkylene glycol

In preferred examples, the polyol is polypropylene glycol.

In one example, the composition further comprises a foam stabiliser.

Suitably, the foam stabiliser is a surfactant.

In preferred examples, the foam stabiliser is a polyether polysiloxane.

According to a second aspect of the present invention, there is provided a method of manufacturing a fire-retardant mattress, including the steps of:
- forming a polyurethane foam from a composition comprising at least a polyol, an organic polyisocyanate, and a fire retardant;
- encapsulating the polyurethane foam within an outer layer comprising a waterproof membrane of silicone rubber and a fire-resistant barrier layer disposed substantially between the waterproof membrane and the polyurethane foam; and
- sealing the waterproof membrane
- wherein the fire-resistant barrier layer comprises a woven cloth, and the woven cloth comprises glass fibers.

In one embodiment, the sealing means is selected from the group consisting of: stitching, gluing, and combinations thereof. The foam may be formed as described in relation to the above example. Throughout this specification, unless otherwise indicated, *"comprise", "comprises"* and *"comprising"* are used inclusively rather than exclusively, so that a stated integer or group of integers may include one or more other non-stated integers or groups of integers. It will also be appreciated that the indefinite articles "a" and *"an"* are not to be read as singular indefinite articles or as otherwise excluding more than one or more than a single subject to which the indefinite article refers. For example, "a" reaction catalyst includes one catalyst, one or more catalysts or a plurality of catalysts.

Further features and advantages of the present invention will become apparent from the following detailed description.

### DETAILED DESCRIPTION OF SPECIFIC EMBODIMENTS

The present invention is predicated on the finding of a fire-retardant mattress, and a method for the manufacture thereof. The method combines the production of a polyurethane foam core having fire-retardant properties and the encapsulation and subsequent sealing of the as-produced polyurethane foam core within a waterproof and naturally fire-retardant outer layer to provide a mattress that is both fire-retardant and securely sealed, thereby reducing the likelihood of the encapsulated polyurethane foam core and/or any other components being exposed to the elements, and thus comprising the fire-retardant properties of the mattress. It will be appreciated by those persons skilled in the relevant art that the polyurethane foam used to form the core of the mattress of the preferred embodiments of the present invention has, among its physical characteristics, a good range of flexibility to suit various desires. Flexible polyurethane foams are generally open-celled materials, while more the rigid polyurethane foams usually have a high proportion of closed cells.

As used herein, the term 'about' means the amount is nominally the number following the term 'about' but the actual amount may vary from this precise number to an unimportant degree.

### Fire-retardant Polyurethane Foam

According to embodiments of the present invention, a fire-retardant polyurethane foam is generated and used as a component of the mattress described herein.

As previously mentioned, melamine is typically employed as a fire retardant in polyurethane foam mattresses. Melamine has fire retardant properties due to the release of nitrogen gas when it is charred or burned which, in effect, starves a fire of oxygen. However, melamine is harmful if swallowed, inhaled or absorbed through the skin. Further to this, melamine is reported to be an irritant when inhaled or in contact with the skin or eyes. It should be apparent that the use of melamine should be avoided due to these characteristics. It is an advantage of the present invention that a fire-retardant mattress can be made substantially in the absence of melamine.

In preferred embodiments, the polyurethane foam is substantially melamine-free. In its broadest form, the polyurethane foam is prepared by reacting together a first part component comprising at least a polyol, a foam stabiliser, a reaction catalyst and a fire retardant, with a second part component comprising an organic di- or polyisocyanate. Upon mixing, a polymerization reaction occurs in three directions, usually referred to as the gel reaction, leading to the formation of a polymer of high molecular weight having a generally large three-dimensional structure. At the same time, the blowing agent or agents produce bubbles that create pores within the mixture as the foam sets. Here, the reaction catalyst promotes both the gelling reaction and the blow reaction, and these reactions must proceed simultaneously and at a competitively balanced rate during the process in order to yield a polyurethane foam having desired physical characteristics.

### Polyol

Suitable polyols may be selected from the group consisting of polyether polyols and polyester polyols.

In one embodiment, particularly where the resulting polyurethane foam mattress requires good flexibility, the polyol is a polyether diol, a polyether triol, or a hydroxyl-terminated polyolefin polyol, having a molecular weight in the range between about 3000 and 3500.

Suitably, the polyol is a polyether diol or triol, particularly those derived from one or more alkylene oxides, phenyl-substituted alkylene oxides, phenyl-substituted alkylene oxides and/or ring-opening cyclic ethers such as ethylene oxide, propylene oxide, styrene oxide, tetrahydrofuran, and the like.

In preferred embodiments, the polyol is a polyether diol in the form of polypropylene glycol.

Good results have been obtained using polypropylene glycol having an average molecular weight of between 3000 and 3500.

It will be appreciated that polyester polyols may be employed in cases where a more rigid polyurethane foam mattress is required. The additional alcohol groups result in additional crosslinking to give a tougher and more rigid polyurethane foam mattress. Therefore, the density and rigidity of the polyurethane foam mattress can be controlled through the selection of polyol.

### Organic polyisocyanate

Suitable organic polyisocyanates include, toluenediisocyanate (TDI), including 2,4 and 2,6 isomers and isocyanate prepolymers of TDI made from the reaction of TDI with polyols, or other aromatic or aliphatic isocyanates.

In one embodiment, the organic polyisocyanate is a hydrocarbon diisocyanate, (e.g. alkylenediisocyanate and arylene diisocyanate), such as toluene diisocyanate, diphenylmethane isocyanate, including polymeric versions, and combinations thereof.

In another embodiment, the organic polyisocyanate comprises isomers of the above, such as methylene diphenyl diisocyanate (MDI) and 2,4- and 2,6-toluene diisocyanate (TDI), as well as known triisocyanates and polymethylene poly(phenylene isocyanates) also known as polymeric or crude MDI and combinations thereof.

Good results have been obtained using from about 20 to 50 parts of toluene diisocyanate (TDI) per 100 parts by weight of the polyether polyol, and preferably from about 30 to 50 parts of toluene diisocyanate per 100 parts by weight of the polyether polyol.

### Blowing or foaming agent

As described above, the polyurethane foam may be prepared in the presence of one or more blowing or foaming agents, a reaction catalyst, a foam stabiliser and a fire-retardant agent.

In preferred embodiments, the blowing agent is water. Thus, during the polymerization reaction, the addition of a small amount of the water to the reaction mixture causes the organic polyisocyanate to decompose resulting in the evolution of carbon dioxide gas bubbles which create the pores within the mixture as the foam sets.

Good results have been obtained using from about 0.5 to 5 parts of water per 100 parts by weight of the polyether polyol.

### Foam stabiliser

The cell size and the structure of the foam are controlled by the foam stabiliser.

In preferred embodiments, the foam stabiliser is a surfactant selected from the family of polyether polysiloxanes.

Good results have been obtained using from about 0.1 to 1.0 parts of a polyether polysiloxane per 100 parts by weight of the polyether polyol.

### Fire retardant

Phosphate esters are particularly advantageous as fire retardants as they form a protective char layer which resists high temperatures which protects the underlying material from coming into contact with oxygen. The protective char layer is also a good insulative layer which helps to protect the underlying material from the heat.

In one embodiment, the fire retardant takes the form of a phosphate ester.

Suitable phosphate esters may be selected from the group consisting of halogenated phosphate esters and non-halogenated phosphate esters.

In preferred embodiments, the phosphate ester is tris-(2-chloroisopropyl)-phosphate (TCPP).

It is one advantage of the present invention that higher levels of the fire retardant are incorporated into the mattress than are seen in the prior art. The inventor has surprisingly found that this not only reduces burning and smoking of the mattress when exposed to a flame but in fact the foam will actually self-extinguish when the flame is removed. This provides for a much safer mattress than is seen in the prior art and will allow for a mattress according to the present invention to pass fire safety requirements which are becoming increasingly stringent globally. It will be appreciated that the fire retardant in the mattress alleviates the problem of the mattress itself fuelling a fire. The foam comprising the fire retardant will be more difficult to set alight and indeed the present inventor has found that removal of a flame from such a foam results in the foam immediately stopping burning.

In one embodiment, the fire retardant is present in at least 10 parts per 100 parts by weight of the polyether polyol.

Suitably, the fire retardant is present in at least 15 parts per 100 parts by weight of the polyether polyol.

In certain embodiments, the fire retardant is present in at least 20 parts per 100 parts by weight of the polyether polyol.

Good results have been obtained using from about 10 to 40 parts of tris-(2-chloroisopropyl)-phosphate per 100 parts by weight of the polyether polyol, preferably about 15 parts to about 30 parts of tris-(2-chloroisopropyl)-phosphate per 100 parts by weight of the polyether polyol.

### Reaction catalyst

In one embodiment, the composition further comprises a catalytic amount of a reaction catalyst.

Suitable reaction catalysts may be selected from the group consisting of a metallic salt, an amine-based catalyst, and combinations thereof.

In preferred embodiments, the reaction catalyst comprises a combination of a tin-based and/or a tertiary amine.

It is generally understood that the tin-based catalyst speeds up the gelling reaction while the amine-based catalyst controls the speed at which the gas, in this case, carbon dioxide gas, is produced. Good results have been obtained using from about 0.2 to 1.0 parts of a combination of stannous octoate and N-methyldicyclohexylamine per 100 parts by weight of the polyether polyol.

Other suitable amine-based catalysts may include, but are not limited to, any one or more of the following: N,N,N',N',N"-pentamethyldiethylenetriamine, N-[3-(diethylamino)propyl]-N,N',N'trimethyl-1,3-propanediamine, N-methyl, N-(N',N'-2-dimethylaminopropyl)ethanolamine, 1,8-Diazabicyclo[5.4.0]undec-7-ene (DBU), tetraethylenediamine, dimethylcyclohexylamine, dimethylethanolamine and 1,4-diazabicyclo[2.2.2]octane (DABCO).

### Optional components

It will be appreciated by those skilled in the relevant art that one or more other components may be added to the reaction mixture to enhance the reaction conditions and/or impart certain properties on the resulting polyurethane foam.

Such optional components may include fillers to modify the density or mechanical properties of the polyurethane foam, pigments or dyes to modify the colour of the polyurethane foam, and crosslinkers or chain extenders to modify the structure of the polyurethane foam. Examples of useful chain extenders having two hydroxyl groups include dipropylene glycol, diethylene glycol, 1,4-butanediol, ethylene glycol, 2,3-butanediol and neopentylglycol. Crosslinkers having 3 to 8 hydroxyl groups include glycerine, pentaerythritol, mannitol, and the like.

Additionally, it will be appreciated that other components may also be included. Such additional components may include antiozonants, antioxidants, as well as thermal or thermal-oxidative degradation inhibitors, UV stabilizers, UV absorbers or any other additive(s) that when added to the foam-forming composition will prevent or inhibit thermal, light, and/or chemical degradation of the resulting polyurethane foam. Also contemplated for use herein are any of the known and conventional biostatic agents, antimicrobial agents and gas-fade inhibiting agents.

### Fire-retardant Mattress

According to another preferred embodiment of the present invention, there is provided a method of manufacturing a fire-retardant mattress and a fire-retardant mattress thereby obtained.

The method comprises, as a first step, the step of forming a fire-retardant polyurethane foam according to the method described above.

Once formed, the method includes encapsulating the fire-retardant polyurethane foam within a waterproof outer layer.

Particularly, the outer layer comprises a waterproof membrane provided in the form of a silicone rubber membrane. A fire-resistant barrier layer is provided in the form of a woven cloth located between the waterproof membrane and the polyurethane foam.

In other words, the fire-resistant mattress comprises a polyurethane foam comprising a fire retardant that is surrounded by a fire-resistant barrier layer, and a waterproof membrane that forms the outer most layer around the fire-resistant barrier layer.

In one embodiment, the fire-resistant mattress comprises an outer silicone rubber water proof membrane, a fire-resistant barrier layer immediately adjacent the water proof membrane and a polyurethane foam core prepared from a composition comprising at least a polyol, an organic polyisocyanate and a fire retardant, immediately adjacent the fire-resistant barrier layer. That is, the foam core is in contact with one surface of the fire-resistant barrier layer and the waterproof membrane is in contact with the opposite surface of the fire-resistant barrier layer. No intervening layers are required for the successful functioning of the mattress, as described herein.

In one embodiment, the silicone rubber membrane has a minimum weight of 80 gsm. Silicone rubber is a natural fire retardant with a low smoke emission. It will be appreciated by those skilled in the relevant art that the silicone rubber membrane may be provided in the form of one or more sheets as desired. For instance, in the case of a single sheet, the sheet may be folded over and the polyurethane foam inserted between the folded sheet. In an alternative arrangement, the number of sheets may correspond to the shape of the polyurethane foam. For instance, in the case of a generally rectangular prism-like polyurethane foam, a shape often used in the manufacture of mattresses, the silicone rubber membrane may be provided in the form of separate sheets each corresponding to a face of the generally rectangular prism.

A fire will typically generate a significant amount of heat and smoke. The evolution of smoke within a confined space can lead to the displacement of oxygen and result in asphyxiation, and possibly death. The inventor has found that the application of a flame to the silicone rubber membrane results in little smoke and little noxious gas evolution. As previously mentioned, prior art mattresses which are covered in polyvinyl chloride (PVC), when exposed to a flame, result in a significant amount of smoke and noxious gases being released. It should be clear that the use of a silicone rubber membrane is advantageous due to the greatly reduced amount of smoke and noxious gas produced upon contact with a flame. The silicone rubber membrane does not catch fire and so will not add to the heat and flame generated within a burning room.

Further to this, the silicone rubber membrane is also waterproof. When water is poured onto the silicone rubber membrane, the water will pool on the membrane and will not permeate through to the underlying foam. This is an advantageous characteristic because liquids can be easily removed without the liquid soaking into the mattress and the outer contact surface of the mattress can be easily wiped clean to maintain hygiene.

A further advantage of the silicone rubber membrane is that it is biologically inert. In this regard, the silicone rubber membrane does not have any adverse reactions when it comes into contact with a user's skin. Therefore, the user does not experience any adverse reactions or discomfort.

It is a distinct advantage that although the silicone rubber membrane is waterproof, it is still permeable to water vapour. This results in the silicone rubber being waterproof but also breathable, which is an important characteristic in a mattress. For instance, moisture from the user's body is able to permeate through the silicone membrane layer and not pool on the surface of the silicone rubber membrane, and this enhances the comfort experienced by the user. The silicone rubber membrane has a water transmission value of suitably between about 0.01L/24hrm² and about 1L/24hrm², more suitably between about 0.10L/24hrm² and about 0.09L/24hrm², preferably between about 0.25L/24hrm² and about 0.75L/24hrm², more preferably between about 0.40L/24hrm² and about 0.60L/24hrm², and most preferably about 0.5L/24hrm².

It will be appreciated that a silicone sprayed surface will not provide such a combination of fire retardancy, waterproof protection and breathability of the present mattress. The present invention comprising the woven cloth under the silicone rubber membrane further facilitates the permeation of water vapour and improves the comfort experienced by the user. In one embodiment, the silicone rubber membrane is a pre-formed complete layer, that is it is not a sprayed on thin silicone layer.

In one embodiment, the woven cloth of fire-resistant barrier layer comprises a woven glass fiber matting formed from fiberglass having a minimum weight of 320 gsm with a twill weave. The glass fiber matting is either provided as a separate layer disposed substantially between the waterproof silicone rubber membrane and the fire-retardant polyurethane foam in the form of a laminate, or the glass fiber matting is coated with liquid silicone on one side thereof so that it forms a solid silicon layer upon being subjected to elevated temperatures or chemicals, such that the resulting outer layer comprises a silicone rubber membrane on the outside and a fire-resistant barrier layer on the inside. The glass fiber provides heat resistance to the mattress and provides another layer of protection to the foam and is discussed hereinafter.

Fiberglass is extremely strong and provides significant tear resistant and strength to the mattress. In this regard, it will be extremely difficult for a user to tear the fiberglass matt either intentionally or unintentionally. This tear resistance is especially useful in an institutional environment as the users will have difficulty in destroying the mattress.

In one embodiment, the woven glass fiber matting is formed from fiberglass with a twill weave. A twill weave is a textile weave with a pattern of diagonal parallel ribs. The twill weave is completed by passing the weft thread over one or more warp threads and then under two more warp threads, with an offset between rows to create the diagonal pattern. A twill weave will provide strength in the vertical and longitudinal direction and provides stretch in the diagonal direction. This characteristic allows the fiberglass matt to provide strength whilst also providing elasticity so that the fiberglass can stretch and accommodate shape changes due to a user's body weight on the mattress. A fiberglass matt formed with a twill weave will have more elastic give compared to a typical weave. As such, the twill weave will stretch when a user lies or sits on the mattress and provides more comfort to the user. If the fiberglass matt does not have this elasticity then the user will not be as comfortable because the mattress is unable to conform to the user's body. Furthermore, when a user sits on the mattress, the fiberglass fabric is stretched so that the foam is depressed by the user's weight. However, when the user is no longer sitting on the bed then foam will expand and cause the fiberglass to revert back to its original shape. It will be appreciated by the person skilled in the art that any weave that provides more elastic give can be used in the fiberglass matt. Once the fire-retardant polyurethane foam is encapsulated within the outer layer with the fire-resistant barrier layer located in between, the method comprises the step of sealing the one or more sheets of the silicone rubber membrane/ woven glass fiber matting laminate together by, for example, using Teflon coated fiberglass thread to stitch the respective edge portions of adjoining sheets together, thereby sealing the fire-retardant polyurethane foam substantially within the silicone rubber membrane/woven glass fiber matting laminate.

The tensile strength of the woven glass fiber matting is extremely high. In this regard, the tensile strength of a 50 mm wide piece of woven glass fiber matt, as described above, has been found to be 1800N in the warp direction of the fabric, and 1400N in the weft direction of the fabric.

In other embodiments, it will be appreciated by those skilled in the relevant art that the respective edge portions of adjoining sheets of the silicone rubber membrane may be joined together by other means such as by gluing or a combination of stitching and gluing.

It will be appreciated that this provides for a mattress with a unique set of properties based upon the interaction of the three layers of outer silicone rubber, underlying fibreglass weave and internal polyurethane foam comprising fire retardant.

As discussed previously, a number of characteristics are required of mattresses and particularly of mattresses which are designed for use in institutions such as prisons and other correctional facilities. Such mattress, while being required to provide for elasticity and hence comfort, breathability and waterproof properties, must also be as fire resistant as possible due to the high potential incidence of fires in inmate cells. The advantage of the present mattress lies in meeting all of these challenges due to the unique combination of layers described previously.

To indicate the effectiveness of the present mattresses they were tested within a small closed-room environment, to replicate a prison cell, and to determine the heat release rate. The fire-retardant mattress of the present invention was compared to a commercially available fire-resistant mattress. In this test, a flaming crib with a heat release rate (HRR) of 25kW is applied to the mattresses and the heat release rate of the burning mattress was monitored. It was found that the present mattress did not exhibit a heat release rate of above 25kW, and this value is essentially the heat provided by the crib. The heat release rate for the present fire-retardant mattress was minimal, and it can be inferred that the present mattress did not actually catch fire and burn and so did not provide any amount of fuel to the flame. On the other hand, the commercially available fire retardant mattress recommended for institution use was also subjected to the same test and it was found that the commercially available fire retardant mattress exhibited a heat release rate of up to 600kW, thus signifying the mattress burned and provided significant fuel to the flame.

During this experiment it was observed that the fire-retardant mattress of the present invention released minimal amount of smoke with the room still highly visible whereas the commercially available mattress emitted large amounts of thick black smoke. In this regard, the maximum smoke extinction coefficient of the commercially available fire retardant mattress was 0.5 compared to the much lower value of 0.14 for the present mattress. Further to this, the smoke extinction coefficient after 180 seconds for the commercially available fire retardant mattress was more than 8 times the magnitude of the present mattress. It should be clear that the present mattress releases a significantly less smoke and provides enhanced safety characteristics.

### EXPERIMENTAL SECTION

### Example 1

A polyurethane foam was prepared from the following components in the indicated proportions:

| **Component** | **Parts by weight** |
|---|---|
| polypropylene glycol | 100 |
| toluene diisocyanate | 41.45 |
| tris-(2-chloroisopropyl)-phosphate (TCPP) | 30 |
| Water | 3.177 |
| stannous octoate | 0.24 |
| N-methyldicyclohexylamine | 0.134 |
| polyether polysiloxane | 1.06 |
| Glycerine | 0.09 |

All of the above components, with the exception of toluene diisocyanate (TDI), were first blended together. After stirring, the toluene diisocyanate was blended in, and the mixture was allowed to expand into a foam.

### RESULTS

**Table 1**

| | **Maximum heat release rate (kw)** | **Smoke extinction coefficient (1/m)** | |
|---|---|---|---|
| | | **180 sec.** | **Maximum** |
| **Comparative Example** | 160-600 | 0.25 | 0.5 |
| **Example 1** | 25 | 0.03 | 0.14 |
| **Advantages** | | | |

The present invention provides distinct advantages in terms of providing a fire-retardant polyurethane foam that can be employed in the manufacture of mattresses. In particular, the polyurethane foam is void of any melamine, often used in conventional mattresses as a fire-retardant, thereby enabling the mechanical properties of the polyurethane foam to be more readily tuned to the needs of the application without weakening the structure of the foam. In addition, by encapsulating the polyurethane foam within a silicone rubber membrane, this not only provides waterproofing to maintain the integrity of the mattress and prolong its overall use, the natural fire-retardant property associated with silicone rubber significantly lessens the likelihood of highly combustible liquids and/or gases being produced in the event of a fire. Further to this, the silicone rubber also allows water vapour to permeate through the membrane and provides more comfort to the user. Moreover, by virtue of silicone rubber being non toxic, its use as a membrane in fire-retardant mattresses alleviates the problems associated with the more commonly used membranes in such applications, most notably PVC. Finally, the use of elevated levels of fire retardant has resulted in a foam which will not continue to burn unless it is continually exposed to a flame. That is, the mattress effectively self-extinguishes when it is no longer exposed to a flame thereby providing for a much safer product for use in environments having significant numbers of mattresses contained therein such as boarding schools, day centres, halls of residence at universities and colleges, holiday camp chalets, hospitals, hostels, hotels, aged care facilities, armed services accommodation, offshore installations, locked psychiatric accommodation and prisons.

It is the combination and orientation of the fire-resistant polyurethane foam, the waterproof membrane, and the fire-resistant barrier that provide the advantageous properties of the present invention. During a fire, the water proof silicone membrane will not release a significant amount of noxious fumes and also does not burn easily. The silicone membrane is also biologically inert. This results in the fire-resistant foam being protected from the fire for a longer period of time. If the fire is maintained for an extended period of time then the fire may encounter the fire-resistant fiberglass matt which will further prevent radiant heat from passing through to the fire-resistant polyurethane foam. After a prolonged period of time even if the fiberglass is breached by the fire, and the fire-resistant polyurethane foam is exposed to the fire it is difficult to burn due to the presence of the fire retardant. Further to this, once the flame is removed the fire-resistant polyurethane foam will actually self-extinguish and so does not in any way propagate the fire. It should be clear that the combination and orientation of these components result in a fire-resistant mattress that does not emit a significant amount of smoke or noxious gases and does not add significant material to fuel the fire.

In summation, the present mattress provides advantageous characteristics which make it suitable for certain environments, such as institutions. The present mattress provides the following required characteristics:
- fire retardancy - provided by virtue of the outer silicone layer in combination with the fibreglass underlayer and the polyurethane comprising the fire retardant;
- waterproof and breathability - provided by the silicone membrane which prevents liquids from passing through, but allows vapours to pass through;
- no smoke or low smoke emission upon contact with a flame - provided by the silicone membrane;
- strength - provided by the fiberglass matt which is resilient to tearing and breakage;
- comfort - provided by the combination of the weave used in the fiberglass matt which results in the stretchable nature of the fiberglass matt, breathability of the silicone membrane and the elasticity of the polyurethane core; and
- biologically inert surface - provided by the silicone membrane.

The present invention provides enhanced safety characteristics with more durable properties and comfort. It will be appreciated that these mattresses can be used in any environment and has only been discussed in relation to an institution for simplicity.

### OTHER EMBODIMENTS

In other embodiments, it will be appreciated that the fire retardant used in the composition for producing the fire-retardant polyurethane foam is not limited to a phosphate ester as described above, but may include other phosphorus-containing fire retardants. For instance, such phosphorus-containing fire retardants may include phosphonates, phosphinates, red phosphorus and ammonium polyphosphate.

In other embodiments, it will be appreciated that the organic polyisocyanate used in the composition for producing the fire-retardant polyurethane foam is not limited to toluene diisocyanate as described above, but may include one or more other organic diisocyanates or organic triisocyanates.

## Claims

1. A fire-retardant mattress comprising:
- a polyurethane foam prepared from a composition comprising at least a polyol, an organic polyisocyanate and a fire retardant; and
- an outer layer encapsulating the polyurethane foam, wherein the outer layer comprises a waterproof membrane of silicone rubber and a fire-resistant barrier layer disposed between the waterproof membrane and the polyurethane foam;
- wherein the fire-resistant barrier layer comprises a woven cloth, and the woven cloth comprises glass fibers.

2. A method of manufacturing a fire-retardant mattress, including the steps of:
- forming a polyurethane foam from a composition comprising at least a polyol, an organic polyisocyanate, and a fire retardant;
- encapsulating the polyurethane foam within an outer layer comprising a waterproof membrane of silicone rubber and a fire-resistant barrier layer disposed between the waterproof membrane and the polyurethane foam; and
- sealing the waterproof membrane
- wherein the fire-resistant barrier layer comprises a woven cloth, and the woven cloth comprises glass fibers.

3. The fire-retardant mattress, or the method, of claim 1 or claim 2, wherein the fire retardant comprises a phosphate ester.

4. The fire-retardant mattress, or the method, of claim 3, wherein the phosphate ester is selected from the group consisting of halogenated phosphate esters and non-halogenated phosphate esters.

5. The fire-retardant mattress, or the method, of any one of claim 3 or claim 4, wherein the phosphate ester is tris-(2-chloroisopropyl)-phosphate (TCPP).

6. The fire-retardant mattress, or the method, of any one of the preceding claims, wherein the polyurethane foam is melamine-free.

7. The fire-retardant mattress, or the method, of any one of the preceding claims, wherein the polyurethane foam is prepared from a composition which further comprises a blowing or foaming agent.

8. The fire-retardant mattress, or the method, of any one of the preceding claims, wherein the organic polyisocyanate comprises an organic diisocyanate.

9. The fire-retardant mattress, or the method, of claim 8, wherein the organic polyisocyanate is an aromatic diisocyanate.

10. The fire-retardant mattress, or the method, of any one of the preceding claims, wherein the polyol is selected from the group consisting of polyether polyols, polyalkylene glycols and polyester polyols.

11. The fire-retardant mattress, or the method, of claim 10, wherein the polyalkylene glycol is a C₂-C₁₂ polyalkylene glycol

12. The fire-retardant mattress, or the method, of claim 11, wherein the polyol is polypropylene glycol.

13. The fire-retardant mattress, or the method, of any one of the proceedings claims, wherein the woven cloth is formed from a twill weave.

## Patentansprüche

1. Feuerhemmende Matratze, umfassend:
- einen Polyurethanschaum, der aus einer Zusammensetzung hergestellt ist, die mindestens ein Polyol, ein organisches Polyisocyanat und ein feuerhemmendes Mittel umfasst; und
- eine Außenschicht, die den Polyurethanschaum einkapselt, wobei die Außenschicht eine wasserdichte Membran aus Silikongummi und eine feuerbeständige Sperrschicht umfasst, die zwischen der wasserdichten Membran und dem Polyurethanschaum angeordnet ist;
- wobei die feuerbeständige Sperrschicht einen gewebten Stoff umfasst und der gewebte Stoff Glasfasern umfasst.

2. Verfahren zur Herstellung einer feuerhemmenden Matratze, das die folgenden Schritte beinhaltet:
- Bilden eines Polyurethanschaums aus einer Zusammensetzung, die mindestens ein Polyol, ein organisches Polyisocyanat und ein feuerhemmendes Mittel umfasst;
- Einkapseln des Polyurethanschaums in eine Außenschicht, die eine wasserdichte Membran aus Silikongummi und eine feuerbeständige Sperrschicht umfasst, die zwischen der wasserdichten Membran und dem Polyurethanschaum angeordnet ist; und
- Abdichten der wasserdichten Membran
- wobei die feuerbeständige Sperrschicht einen gewebten Stoff umfasst und der gewebte Stoff Glasfasern umfasst.

3. Feuerhemmende Matratze oder Verfahren nach Anspruch 1 oder Anspruch 2, wobei das feuerhemmende Mittel einen Phosphatester umfasst.

4. Feuerhemmende Matratze oder Verfahren nach Anspruch 3, wobei der Phosphatester ausgewählt ist aus der Gruppe bestehend aus halogenierten Phosphatestern und nicht halogenierten Phosphatestern.

5. Feuerhemmende Matratze oder Verfahren nach einem der Ansprüche 3 oder 4, wobei der Phosphatester Tris-(2-chlorisopropyl)-phosphat (TCPP) ist.

6. Feuerhemmende Matratze oder Verfahren nach einem der vorhergehenden Ansprüche, wobei der Polyurethanschaum melaminfrei ist.

7. Feuerhemmende Matratze oder Verfahren nach einem der vorhergehenden Ansprüche, wobei der Polyurethanschaum aus einer Zusammensetzung hergestellt wird, die ferner ein Treib- oder Schaummittel umfasst.

8. Feuerhemmende Matratze oder Verfahren nach einem der vorhergehenden Ansprüche, wobei das organische Polyisocyanat ein organisches Diisocyanat umfasst.

9. Feuerhemmende Matratze oder Verfahren nach Anspruch 8, wobei das organische Polyisocyanat ein aromatisches Diisocyanat ist.

10. Feuerhemmende Matratze oder Verfahren nach einem der vorhergehenden Ansprüche, wobei das Polyol ausgewählt ist aus der Gruppe bestehend aus Polyetherpolyolen, Polyalkylenglykolen und Polyesterpolyolen.

11. Feuerhemmende Matratze oder Verfahren nach Anspruch 10, wobei das Polyalkylenglykol ein C₂-C₁₂-Polyalkylenglykol ist.

12. Feuerhemmende Matratze oder Verfahren nach Anspruch 11, wobei das Polyol Polypropylenglykol ist.

13. Feuerhemmende Matratze oder Verfahren nach einem der vorhergehenden Ansprüche, wobei der gewebte Stoff aus einer Köperbindung gebildet ist.

## Revendications

1. Matelas ignifuge comprenant :
- une mousse de polyuréthane préparée à partir d'une composition comprenant au moins un polyol, un polyisocyanate organique et un agent ignifuge ; et
- une couche externe encapsulant la mousse de polyuréthane, ladite couche externe comprenant une membrane imperméable à l'eau en caoutchouc de silicone et une couche barrière résistant au feu disposée entre la membrane imperméable à l'eau et la mousse de polyuréthane ;
- ladite couche barrière résistant au feu comprenant un tissu tissé, et ledit tissu tissé comprenant des fibres de verre.

2. Procédé de fabrication d'un matelas ignifuge, comprenant les étapes de :
- formation d'une mousse de polyuréthane à partir d'une composition comprenant au moins un polyol, un polyisocyanate organique et un agent ignifuge ;
- encapsulation de la mousse de polyuréthane dans une couche externe comprenant une membrane imperméable à l'eau en caoutchouc de silicone et une couche barrière résistant au feu disposée entre la membrane imperméable à l'eau et la mousse de polyuréthane ; et
- scellement de la membrane étanche à l'eau
- ladite couche barrière résistant au feu comprenant un tissu tissé, et ledit tissu tissé comprenant des fibres de verre.

3. Matelas ignifuge, ou procédé, selon la revendication 1 ou la revendication 2, ledit agent ignifuge comprenant un ester de phosphate.

4. Matelas ignifuge, ou procédé, selon la revendication 3, ledit ester de phosphate étant choisi dans le groupe constitué par les esters de phosphate halogénés et les esters de phosphate non halogénés.

5. Matelas ignifuge, ou procédé, selon l'une quelconque des revendications 3 ou 4, ledit ester de phosphate étant le tris-(2-chloroisopropyl)-phosphate (TCPP).

6. Matelas ignifuge, ou procédé, selon l'une quelconque des revendications précédentes, ladite mousse de polyuréthane étant exempte de mélamine.

7. Matelas ignifuge, ou procédé, selon l'une quelconque des revendications précédentes, ladite mousse de polyuréthane étant préparée à partir d'une composition qui comprend en outre un agent gonflant ou moussant.

8. Matelas ignifuge, ou procédé, selon l'une quelconque des revendications précédentes, ledit polyisocyanate organique comprenant un diisocyanate organique.

9. Matelas ignifuge, ou procédé, selon la revendication 8, ledit polyisocyanate organique étant un diisocyanate aromatique.

10. Matelas ignifuge, ou procédé, selon l'une quelconque des revendications précédentes, ledit polyol étant choisi dans le groupe constitué par les polyols de polyéther, les polyalkylène glycols et les polyols de polyester.

11. Matelas ignifuge, ou procédé, selon la revendication 10, ledit polyalkylène glycol étant un polyalkylène glycol en C₂ à C₁₂.

12. Matelas ignifuge, ou procédé, selon la revendication 11, ledit polyol étant le polypropylène glycol.

13. Matelas ignifuge, ou procédé, selon l'une quelconque des revendications précédentes, ledit tissu tissé étant formé à partir d'un tissage sergé.
